# EUROPÄISCHE PATENTSCHRIFT

(11) **EP 2 773 243 B1**
(45) Veröffentlichungstag und Bekanntmachung des Hinweises auf die Patenterteilung: **06.12.2017**
(21) Anmeldenummer: 12783901.7
(22) Anmeldetag: 10.10.2012
(51) Int. Cl.: A47J 27/08, A47J 36/32

(54) **STEUERUNGS-, REGELUNGS- UND BEDIENVORRICHTUNG FÜR EIN GARGERÄT**
CONTROL- AND OPERATING DEVICE FOR A COOKING APPLIANCE
DISPOSITIF DE CONTROL ET OPERATION POUR UN UTENSILE DE CUISINE

(30) Priorität: 31.10.2011 DE 102011085526
(43) Veröffentlichungstag der Anmeldung: 10.09.2014
(73) Patentinhaber: WMF Württembergische Metallwarenfabrik AG, 73309 Geislingen/Steige (DE)
(72) Erfinder: BARTH, Peter, 89601 Schelklingen (DE); DÖPPE, Matthias, 89129 Langenau (DE); NEUMAYER, Martin, 89547 Gerstetten-Dettingen (DE); VON BANK, Reinhold, 88433 Semmerhofen (DE)
(74) Vertreter: BRP Renaud & Partner mbB Rechtsanwälte Patentanwälte Steuerberater
(86) Internationale Anmeldenummer: PCT/EP2012/070085
(87) Internationale Veröffentlichungsnummer: WO 2013/064348

(56) Entgegenhaltungen:
- DE-A1-102008 051 265
- DE-U1-202011 003 293
- FR-A1- 2 931 648
- JP-A- 2006 280 789

## Beschreibung

Die vorliegende Erfindung betrifft eine Steuerungs-, Regelungs- und Bedienvorrichtung für ein Gargerät gemäß dem Oberbegriff des Anspruchs 1.

Aus der JP 2006 280789 A ist eine gattungsgemäße Steuerungs-, Regelungs- und Bedienvorrichtung bekannt.

Aus der FR 2 931 648 A1 ist ebenfalls eine Steuerungs-, Regelungs- und Bedienvorrichtung für ein Gargerät mit zumindest einer am zugehörigen Gargerät befestigbaren Primäreinheit bekannt. Die Primäreinheit weist einen Sensor zur Erfassung von zumindest einem einen Garprozess beeinflussenden Parameter aufweist und ist zur Übermittlung desselben an eine Sekundäreinheit ausgebildet ist.

Aus der DE 10 2008 051 265 A1 ist ebenfalls eine Steuerungs-, Regelungs- und Bedienvorrichtung für ein Gargerät bekannt.

Um das Garen von Lebensmitteln vereinfachen zu können, sind bereits eine Vielzahl von Hilfsmitteln, wie beispielsweise Timer und/oder Temperaturanzeigen bekannt. Derartige Timer bzw. Temperaturanzeigen erfassen dabei jedoch ausschließlich einen individuellen Parameter, der jedoch viele andere, den Garprozess ebenfalls beeinflussende Parameter, nicht berücksichtigt. Wird beispielsweise über den Timer eine vordefinierte Garzeit eingestellt, so bleibt ein gutes Garergebnis nach Ablauf der im Timer eingegebenen Zeit trotzdem offen, da der Timer nicht in der Lage ist, die im Gargerät herrschende Gartemperatur und/oder individuelle Gardaten des jeweils zu garenden Lebensmittels zu berücksichtigen. Aus diesem Grund liefern auch die zuvor genannten Hilfsmittel oftmals nur unzureichende Garergebnisse, die insbesondere ungeübten Laien die Freude am Kochen verderben können.

Zunehmend finden auch Koch- und Garsysteme Verwendung, die mit der Energiequelle, bspw. einem Herd, per Funk kommunizieren können. Derartige Koch- und Garsysteme ermöglichen neben einer reinen Zeit-, Temperatur- und/oder Drucküberwachung oftmals auch eine Steuerung des Herdes, wodurch bspw. vorprogrammierte Garprogramme ausgeführt werden können. Der große Nachteil derartiger Koch- und Garsysteme ist jedoch die vergleichsweise aufwändige Technik, die so teuer ist, dass sie bisher nur im gastronomischen Bereich Einzug gehalten hat.

Die vorliegende Erfindung beschäftigt sich daher mit dem Problem, eine Steuerungs-, Regelungs- und Bedienvorrichtung für ein Gargerät anzugeben, welche eine Überwachung eines Garprozesses auch im privaten Bereich möglich macht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Steuerungs-, Regelungs- und Bedienvorrichtung für ein Gargerät anzugeben, welche im Wesentlichen aus zumindest einer am zugehörigen Gargerät befestigbaren Primäreinheit und einer damit drahtlos kommunizierenden Sekundäreinheit besteht. Die Primäreinheit ist dabei als Sensoreinrichtung ausgebildet und in der Lage, zumindest einen im jeweiligen Gargerät ablaufenden Garprozess beeinflussenden Parameter zu erfassen und diesen an die Sekundäreinheit zu übermitteln. Die Sekundäreinheit wiederum ist bspw. als Smartphone, Laptop, als Tablet-PC, als Pager oder als PC ausgebildet und zur Auswertung und Verarbeitung der von der Primäreinheit empfangenen Daten und zum Anzeigen und/oder Senden entsprechender Handlungsanweisungen an die Primäreinheit ausgebildet. Die Sensoreinrichtung kann bspw. ein Temperatur-bzw. Drucksignal analog erfassen und mit Hilfe eines Messformwandlers digitalisieren, um dieses dann, bspw. über eine Funkschnittstelle, zur Sekundäreinheit zu übertragen. In der Sekundäreinheit, die insbesondere als Smartphone ausgebildet ist, erfolgt dann die Verarbeitung der eingehenden Signale und die Ausgabe entsprechender Handlungsanweisungen, bspw. an einem Display der Sekundäreinheit oder aber an der Primäreinheit, sodass zwischen der Primäreinheit und der Sekundäreinheit grundsätzlich eine bidirektionale Kommunikation möglich ist. Mit der erfindungsgemäßen Steuerungs-, Regelungs- und Bedienvorrichtung ist es somit erstmals möglich, mittels eines einfachen Smartphones oder eines Laptops sowie zugehöriger Anwendungen, sog. Apps, einen Kochprozess einfach und zugleich effektiv zu überwachen und ggf. zu steuern. Dabei können mittels einer einzigen Sekundäreinheit selbstverständlich mehrere Primäreinheiten überwacht werden. Denkbar ist auch, dass auf der jeweiligen Sekundäreinheit, bspw. dem Smartphone, entsprechende Kochprogramme abgespeichert sind, anhand der die entsprechenden und in Abhängigkeit der von der Primäreinheit empfangenen Signale ausgewählten Handlungsanweisungen berechnet/ausgewählt werden. Zudem ist die Sekundäreinheit erfindungsgemäß derart ausgebildet, dass sie ausgehend vom Lebensmittel mit der längsten Gardauer einen jeweils optimalen Einlegezeitpunkt für das Lebensmittel mit der nächstkürzeren Gardauer ermittelt und anzeigt. Da die bevorzugten Gartemperaturen der Sekundäreinheit, bspw. dem Smartphone/Computer, bekannt sind, kann mit Hilfe der jeweils passenden Garzeiten somit die Reihenfolge der Lebensmittelzugabe in das Gargerät vorab berechnet und anschließend dem Anwender zur passenden Zeit über die Sekundäreinheit während des Garprozesses mitgeteilt werden. Der Vorteil besteht dabei darin, dass alle Lebensmittel in etwa zur gleichen Zeit fertig werden, wobei zugleich die Gefahr von Verbrennungen durch heißen Wasserdampf durch vorzeitige Entnahme einzelner Lebensmittel ausgeschlossen werden kann.

Bei einer vorteilhaften Weiterbildung der erfindungsgemäßen Lösung weist die Sekundäreinheit einen Datenspeicher auf, in dem lebensmittelspezifische Gardaten unter Berücksichtigung der RGT-Regel (Reaktionsgeschwindigkeit-Temperatur-Regel) hinterlegt sind, wobei die Sekundäreinheit zur Steuerung/Regelung des Garprozesses in dem jeweiligen Gargerät in Abhängigkeit der ausgewählten Lebensmittel und der RGT-Regel ausgebildet ist. Die RGT-Regel ist für eine optimale Zubereitung der Lebensmittel essentiell, da die Gartemperatur maßgebend für die erforderliche Garzeit ist. Steigt nämlich die Gartemperatur im Gargerät an, so kann die Sekundäreinheit mit Hilfe entsprechender Programme und der RGT-Regel die noch verbleibende Restgarzeit entsprechend anpassen, d. h. reduzieren.

Bei einer weiteren vorteilhaften Ausführungsform der erfindungsgemäßen Lösung sind in einem Datenspeicher der Sekundäreinheit lebensmittelspezifische Soll-Garwerte, insbesondere unter Berücksichtigung der RGT-Regel, hinterlegt, wobei die Primäreinheit zur Erfassung von zumindest einem Ist-Garwert ausgebildet ist. Durch einen Soll-Ist-Garwertvergleich ist die Sekundäreinheit in der Lage, entsprechende Handlungsanweisungen zu berechnen und zugleich dem Benutzer anzuzeigen. Dabei ist vorstellbar, dass die Sekundäreinheit, d. h. bspw. das Smartphone, anhand der tatsächlichen Innentemperatur im Gargerät (Ist-Gartemperatur) und der vorgegebenen Soll-Gartemperatur eine Hilfestellung für die manuelle Herdregelung an den Benutzer ausgibt. Dies kann bspw. mit Hilfe eines Balkens bzw. eines Pfeils im Display der Sekundäreinheit geschehen, wobei die Länge des Pfeils mit der Soll-Ist-Garwertabweichung korreliert und der Pfeil zudem richtungsabhängig angezeigt werden kann, je nach dem ob die im Gargerät erfasste Ist-Gartemperatur zu niedrig oder zu hoch ist und deshalb die Heizleistung des Herdes erhöht oder reduziert werden muss. Mit einem entsprechenden App (Anwendung) auf dem zugehörigen Smartphone sind somit die Überwachung und zugleich auch die Steuerung des Garprozesses vergleichsweise einfach und zudem professionell möglich. Dem Benutzer bleibt es dabei selbstverständlich überlassen, die seitens der Sekundäreinheit vorgebebenen Soll-Garwerte entsprechend abzuändern oder zu übernehmen.

Mit Hilfe der erfindungsgemäßen Steuerungs-, Regelungs- und Bedienvorrichtung kann erstmals eine massenmarkttaugliche Lösung für die

Überwachung und Steuerung von Garprozessen angeboten werden, die unter Zuhilfenahme einer Primäreinheit, einer Sekundäreinheit sowie entsprechender Software eine intelligente Restgarzeitberechnung auf Grundlage der RGT-Regel zusammen mit einem Gargutmanagement (unterschiedliche Einlegezeitpunkte) ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: eine Ansicht auf eine erfindungsgemäße Steuerungs-, Regelungs-und Bedienvorrichtung,
- Fig. 2: einen schematischen Aufbau der Primäreinheit und der Sekundäreinheit,
- Fig. 3: ein Ablaufdiagramm zur Anpassung unterschiedlicher Garzeiten von unterschiedlichen Lebensmitteln,
- Fig. 4: eine mögliche Visualisierung einer Soll-Ist-Gartemperaturabweichung auf der Sekundäreinheit.

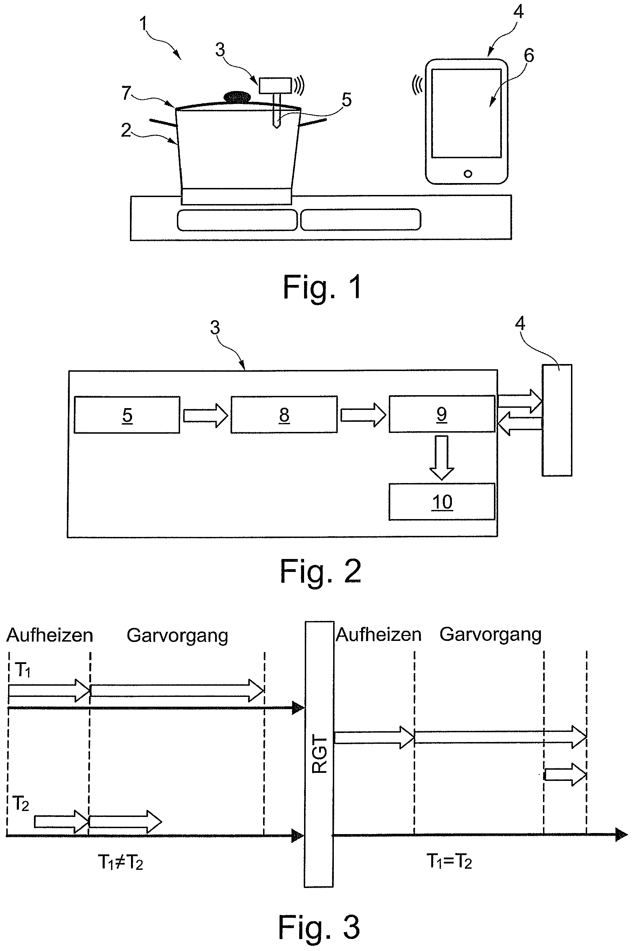

Entsprechend der Fig. 1, weist eine erfindungsgemäße Steuerungs-, Regelungs-und Bedienvorrichtung 1 für zumindest ein Gargerät 2 eine an diesem befestigbare Primäreinheit 3 auf, die zur drahtlosen Kommunikation mit einer Sekundäreinheit 4 ausgebildet ist. Die Primäreinheit 3 umfasst dabei eine Sensoreinrichtung 5 zur Erfassung von zumindest einem, einen Garprozess beeinflussenden Parameter im Gargerät 2 und ist zugleich zur drahtlosen Übermittlung eines derartigen Parameters an die Sekundäreinheit 4 ausgebildet. Drahtlos heißt in diesem Fall bspw. per Funk, W-Lan, Bluetooth, GSM, UMTS, DECT oder RFID. Die Sekundäreinheit 4, die insbesondere als Smartphone, aber auch als Laptop, als Tablet-PC, als Pager oder als PC ausgebildet sein kann, kann die von der Primäreinheit 3 empfangenen Daten auswerten und verarbeiten und daraus entsprechende Handlungsanweisungen berechnen bzw. ermitteln und an einem entsprechenden Display 6 anzeigen bzw. derartige Handlungsanweisungen auch wiederum an die Primäreinheit 3 drahtlos übertragen. Mit der erfindungsgemäßen Steuerungs-, Regelungs- und Bedienvorrichtung 1 ist somit auch eine einfache und kostengünstige Überwachung von Garprozessen, insbesondere im privaten Bereich möglich. Insbesondere bei Verwendung moderner Smartphones oder Tablet-PC's können zudem zugehörige Anwendungen, sog. Apps, verwendet werden, in welchen nicht nur lebensmittelspezifische Gardaten, sondern ganze Kochprogramme hinterlegt sind.

Selbstverständlich kann die Sekundäreinheit 4 in einem entsprechenden Datenspeicher auch lebensmittelspezifische Gardaten unter Berücksichtigung der RGT-Regel (Reaktionsgeschwindigkeit-Temperatur-Regel) hinterlegt haben, wobei in diesem Fall die zuvor genannten App's zur Steuerung/Regelung des Garprozesses in Abhängigkeit der ausgewählten Lebensmittel und der RGT-Regel verwendet werden.

Die Sensoreinrichtung 5 weist zumindest einen Temperatursensor, wie z. B. einen NTC- oder PTC-Wiederstand, einen Drucksensor und/oder einen Füllstandsensor auf. Ebenfalls denkbar sind Sensoren wie ein Thermographiesensor, ein Kerntemperaturfühler und/oder ein Drucksensor auf Basis eines Piezo-Prinzips. Die Primäreinheit 3 ist dabei lösbar an einem Deckel 7 des Gargeräts 2 befestigt.

Betrachtet man die Figur 2, so kann man den prinzipiellen Aufbau der Sekundäreinheit 3 erkennen. Die Sekundäreinheit 3 besitzt die Sensoreinrichtung 5, die auf analogem Wege, bspw. ein Temperatursignal erfasst. Ein Analogdigitalwandler 8, bspw. ein Messformumwandler, wandelt nun das analog empfangene Signal in ein digitales Signal um und übermittelt dies an eine Sende-/Empfangseinrichtung 9, bspw. ein Funkmodul bzw. eine Antenne. Von dieser Sende-/Empfangseinrichtung 9 wird das entsprechende Signal drahtlos an die Sekundäreinheit 4 übermittelt bzw. entsprechende Handlungsanweisungen von dieser empfangen. Die empfangenen Signale bzw. Handlungsanweisungen können dann über eine Anzeige 10, bspw. ebenfalls ein Display oder LED's, angezeigt werden.

Die Sekundäreinheit 4 ist darüber hinaus derart ausgebildet, dass sie ausgehend vom Lebensmittel mit der längsten Gardauer, einen jeweils optimalen Einlegezeitpunkt für das Lebensmittel mit der nächstkürzeren Gardauer ermittelt und über das Display 6 anzeigt. Sie ist auch in der Lage, bei ausgewählten Lebensmitteln mit unterschiedlichen Gartemperaturen unterschiedliche Fertigstellungszeitpunkte anzuzeigen, bzw. einen für alle ausgewählte Lebensmittel gemittelten gemeinsamen Fertigstellungszeitpunkt zu berechnen und über das Display 6 anzuzeigen.

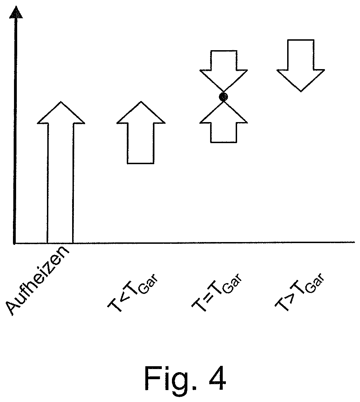

In der Sekundäreinheit 4 können zudem lebensmittelspezifische Gardaten in der Art von Soll-Garwerten, insbesondere unter Berücksichtung der RGT-Regel, hinterlegt sein, wobei die Primäreinheit 3 zur Erfassung von Ist-Garwerten ausgebildet ist. Über die Anzeige 6 der Sekundäreinheit 4 kann dann eine entsprechende Soll-Ist-Garwertabweichung, wie diese bspw. gemäß der Fig. 4 dargestellt ist, angezeigt werden. Darüber hinaus ist die Sekundäreinheit 4 in der Lage, aus der ermittelten Soll-Ist-Garwertabweichung eine entsprechende Handlungsanweisung abzuleiten und anzuzeigen. Auch kann sie ein entsprechendes Signal an die Primäreinheit 3 bzw. einen Herd übermitteln, sofern sie ein Verlassen eines vordefinierten Soll-Ist-Garwerttoleranzbereichs feststellt.

Mit der erfindungsgemäßen Steuerungs-/Regelungs- und Bedienvorrichtung 1 besteht darüber hinaus die Möglichkeit, mehrere Garprozesse gleichzeitig zu überwachen, insbesondere das Garen von mehr als einem Lebensmittel innerhalb eines Gargeräts 2 oder aber in mehreren Gargeräten 2 zu kontrollieren. Da die individuelle Koch- bzw. Gartemperatur bzw. Garzeit der Sekundäreinheit 4 bekannt ist, kann mit Hilfe der jeweiligen Garzeiten die Reihenfolge der Lebensmittelzugabe in das jeweilige Gargerät 2 vorab berechnet und anschließend dem Anwender zu passender Zeit über das Display 6 der Sekundäreinheit 4 mitgeteilt werden. Der große Vorteil besteht dabei darin, dass sämtliche Lebensmittel in etwa zur gleichen Zeit fertiggestellt werden, wobei gleichzeitig die Gefahr von Verbrennungen durch heißen Wasserdampf durch vorzeitige Entnahme einzelner Lebensmittel vorzugsweise gänzlich ausgeschlossen werden kann. Um die Übersicht dahingehend zu verbessern, welches der einzelnen Gargeräte 2 für die Zugabe des jeweiligen Lebensmittels ausgewählt wurde, kann die Sekundäreinheit 4 zugleich der jeweiligen Primäreinheit 3 ein entsprechendes Signal übersenden, woraufhin diese dann bspw. über eine LED, einen Buzzer, oder einen Vibrationsmechanismus ein entsprechendes Signal an den Anwender ausgibt.

Sollen zwei oder mehr Lebensmittel in ein und demselben Gargerät 2 gegart werden, so kann es unter Umständen vorkommen, dass nur Garzeiten für unterschiedliche Gartemperaturen bekannt sind. Abhilfe hierfür kann die RGT-Regel bieten, wie diese gemäß der Fig. 3 dargestellt ist, sodass bei unterschiedlichen Lebensmitteln mit unterschiedlichen Gartemperaturen T1 und T2 über die RGT-Regel eine gemeinschaftliche Gartemperatur, die niedriger als bspw. die Gartemperatur T1 und höher als die Gartemperatur T2 ist, berechnet wird, wobei dann unterschiedliche Einlegezeitpunkte für die jeweiligen Lebensmittel berechnet und angezeigt werden. Nach Auswerten der RGT-Regel kann somit die Sekundäreinheit 4 eine gemeinsame neue Gartemperatur und die jeweils individuellen Einlegezeitpunkte so wählen, dass beide Lebensmittel zu einem gemeinsamen Zeitpunkt fertig sind.

Gemäß der Fig. 4 ist eine Anzeige über das Display 6 dargestellt, bei welcher entsprechende Handlungsanweisungen in Abhängigkeit eines durchgeführten Soll-Ist-Garwertvergleichs dargestellt sind. Ist bspw. die ermittelte Gartemperatur zu gering, so kann ein entsprechender Pfeil (nach oben) zum Aufheizen angezeigt werden. Die Pfeillänge korreliert dabei mit dem Grad der ermittelten Soll-Ist-Garwertabweichung bzw. insbesondere der ermittelten Soll-Ist-Gartemperaturabweichung. Ist die ermittelte Gartemperatur T kleiner als die vorgegebene Soll-Gartemperatur T_{Gar}, so zeigt je nach Abhängigkeit der ermittelten Soll-Ist-Gartemperaturabweichung der Pfeil bspw. nach oben, wogegen er bei einer ermittelten Gartemperatur T, die höher ist als die vorgegebene Gartemperatur T_{Gar} einen Pfeil nach unten anzeigt. Die Fig. 4 zeigt somit eine Visualisierung der Differenz zwischen gewünschter Gartemperatur T_{Gar}, d. h. vorgegebener Gartemperatur T_{Gar} und tatsächlicher Gartemperatur T. Stimmt die vorgegebene Gartemperatur T_{Gar} und die tatsächlich vorhandene Ist-Gartemperatur T überein, so können zwei sich entgegenstehende Pfeile angezeigt werden.

Mit der erfindungsgemäßen Steuerungs-/Regelungs- und Bedienvorrichtung 1 lässt sich somit der Kochprozess auch im nichtgewerblichen, d. h. bspw. nichtgastronomischen, Bereich mittels eines einfachen Smartphones oder Tablet-PC's überwachen und kontrollieren.

## Patentansprüche

1. Steuerungs-, Regelungs- und Bedienvorrichtung (1) für ein Gargerät (2), mit zumindest einer am zugehörigen Gargerät (2) befestigbaren Primäreinheit (3), die zur drahtlosen Kommunikation mit einer Sekundäreinheit (4) ausgebildet ist, wobei die Primäreinheit (3) als Sensoreinrichtung (5) zur Erfassung von zumindest einem, einen Garprozess beeinflussenden Parameter und zur Übermittlung desselben an die Sekundäreinheit (4) ausgebildet ist, wogegen die Sekundäreinheit (4) zur Auswertung und Verarbeitung der von der Primäreinheit (3) empfangenen Daten und zum Anzeigen und/oder Senden entsprechender Handlungsanweisungen an die Primäreinheit (3) ausgebildet ist, wobei die Sekundäreinheit (4) als Smartphone, als Laptop, als Tablet-PC, als Pager oder als PC ausgebildet ist, **dadurch gekennzeichnet,**
- **dass** die Sekundäreinheit (4) derart ausgebildet ist, dass sie ausgehend vom Lebensmittel mit der längsten Gardauer, einen jeweils optimalen Einlegezeitpunkt für das Lebensmittel mit der nächst kürzeren Gardauer ermittelt und anzeigt.

2. Steuerungs-, Regelungs- und Bedienvorrichtung nach Anspruch 1,
**dadurch gekennzeichnet,**
- **dass** die Sekundäreinheit (4) einen Datenspeicher aufweist, in welchem lebensmittelspezifische Gardaten unter Berücksichtigung der RGT-Regel (Reaktionsgeschwindigkeit-Temperatur-Regel) hinterlegt sind, und/oder
- **dass** die Sekundäreinheit (4) zur Steuerung/Regelung des Garprozesses in Abhängigkeit der ausgewählten Lebensmittel und der RGT-Regel ausgebildet ist.

3. Steuerungs-, Regelungs- und Bedienvorrichtung nach Anspruch 1 oder 2,
**dadurch gekennzeichnet,**
**dass** die Sensoreinrichtung (5) zumindest einen Temperatursensor, wie z. B. ein NTC- oder PTC-Widerstand, einen Drucksensor und/oder einen Füllstandssensor aufweist.

4. Steuerungs-, Regelungs- und Bedienvorrichtung nach einem der vorhergehenden Ansprüche,
**dadurch gekennzeichnet,**
- **dass** die Sekundäreinheit (4) derart ausgebildet ist, dass sie bei ausgewählten Lebensmitteln mit unterschiedlichen Gartemperaturen unterschiedliche Fertigstellungszeitpunkte der einzelnen Lebensmittel anzeigt, oder
- **dass** die Sekundäreinheit (4) derart ausgebildet ist, dass sie bei ausgewählten Lebensmitteln mit unterschiedlichen Gartemperaturen einen gemittelten gemeinsamen Fertigstellungszeitpunkt aller zu garender Lebensmittel ermittelt und über die Anzeigeeinrichtung anzeigt.

5. Steuerungs-, Regelungs- und Bedienvorrichtung nach einem der vorhergehenden Ansprüche,
**dadurch gekennzeichnet,**
**dass** eine Kommunikation zwischen Primäreinheit (3) und Sekundäreinheit (4) über
- WLAN (Wireless Local Area Network),
- Bluetooth,
- GSM (Global System for Mobile Communications),
- UMTS (Universal Mobile Telecommunications System),
- DECT (Digital Enhanced Cordless Telecommunications),
- RFID (Radio Frequency Identification) erfolgt.

6. Steuerungs-, Regelungs- und Bedienvorrichtung nach einem der vorhergehenden Ansprüche,
**dadurch gekennzeichnet,**
- **dass** in der Sekundäreinheit (4) lebensmittelspezifische Soll-Garwerte, insbesondere unter Berücksichtigung der RGT-Regel (Reaktionsgeschwindigkeit-Temperatur-Regel) hinterlegt sind,
- **dass** die Primäreinheit (3) zur Erfassung von zumindest einem, den Garprozess beeinflussenden Ist-Garwert ausgebildet ist,
- **dass** die Sekundäreinheit (4) zur Ermittlung und zum Anzeigen einer Soll-Ist-Garwertabweichung ausgebildet ist.

7. Steuerungs-, Regelungs- und Bedienvorrichtung nach Anspruch 6,
**dadurch gekennzeichnet,**
**dass** die Sekundäreinheit (4) derart ausgebildet ist, dass sie aus einer ermittelten Soll-Ist-Garwertabweichung eine Handlungsanweisung berechnet und anzeigt.

8. Steuerungs-, Regelungs- und Bedienvorrichtung nach einem der vorhergehenden Ansprüche,
**dadurch gekennzeichnet,**
**dass** die Primäreinheit (3) eine Anzeige, insbesondere in der Art von LED's aufweist, die bei Erhalt einer Garanweisung und/oder bei Verlassen eines Soll-Ist-Garwerttoleranzbereichs ein Signal erzeugt.

9. Steuerungs-, Regelungs- und Bedienvorrichtung nach einem der vorhergehenden Ansprüche,
**dadurch gekennzeichnet,**
**dass** in der Sekundäreinheit (4) Kochprogramme abgespeichert sind.

## Claims

1. Control, regulation and operating device (1) for a cooking appliance (2), with at least one primary unit (3) which can be mounted on the associated cooking appliance (2) and is designed to communicate wirelessly with a secondary unit (4), wherein the primary unit (3) is designed as a sensor device (5) for detecting at least one parameter that influences a cooking process and for transmitting the same to the secondary unit (4), whereas the secondary unit (4) is designed to evaluate and process the data received from the primary unit (3) and to display and/or send corresponding handling instructions to the primary unit (3), wherein the secondary unit (4) is configured as a smartphone, a laptop, a tablet PC, a pager or a PC,
**characterised in that**
the secondary unit (4) is designed such that, based on the food with the longest cooking time, it calculates and displays a respectively optimal point of time for adding the food with the next shorter cooking time.

2. Control, regulation and operating device according to claim 1,
**characterised in that**
- the secondary unit (4) comprises a data store in which food-specific cooking data is stored taking the RGT rule (reaction speed-temperature-rule) into account, and/or
- the secondary unit (4) is designed for controlling/regulating the cooking process in dependence of the chosen foods and the RGT rule.

3. Control, regulation and operating device according to claim 1 or 2,
**characterised in that**
the sensor device (5) comprises at least one temperature sensor such as an NTC or PTC resistor, a pressure sensor and/or a filling level sensor.

4. Control, regulation and operating device according to any of the preceding claims,
**characterised in that**
- the secondary unit (4) is designed such that for chosen foods with different cooking temperatures it displays different completion points in time of individual foods, or
- the secondary unit (4) is designed such that for chosen foods with different cooking temperatures it calculates an averaged common completion point in time of all foods to be cooked and displays this via the display device.

5. Control, regulation and operating device according to any of the preceding claims,
**characterised in that**
a communication between the primary unit (3) and the secondary unit (4) takes place via
- WLAN (Wireless Local Area Network),
- Bluetooth,
- GSM (Global System for Mobile Communications),
- UMTS (Universal Mobile Telecommunications System),
- DECT (Digital Enhanced Cordless Telecommunications),
- RFID (Radio Frequency Identification).

6. Control, regulation and operating device according to any of the preceding claims,
**characterised in that**
- food-specific cooking values, in particular taking the RGT rule (reaction speed-temperature-rule) into account, are stored in the secondary unit (4),
- the primary unit (3) is designed to detect at least one actual cooking value influencing the cooking process,
- the secondary unit (4) is designed to calculate and display a required/actual-cooking value deviation.

7. Control, regulation and operating device according to claim 6,
**characterised in that**
the secondary unit (4) is designed such that it calculates and displays a handling instruction from a calculated required/actual-cooking value deviation.

8. Control, regulation and operating device according to any of the preceding claims,
**characterised in that**
the primary unit (3) comprises a display, in particular in the form of LEDs, which generates a signal on receipt of a cooking instruction and/or when a required/actual-cooking value tolerance range is exceeded.

9. Control, regulation and operating device according to any of the preceding claims,
**characterised in that**
cooking programs are stored in the secondary unit (4).

## Revendications

1. Dispositif de commande, de réglage et de manipulation (1) pour un appareil de cuisson (2), comprenant au moins une unité primaire (3) fixable à l'appareil de cuisson associé (2), laquelle unité est conçue pour une communication sans fil avec une unité secondaire (4), dans lequel l'unité primaire (3) est conçue sous la forme d'un dispositif de détection (5) pour détecter au moins un paramètre influençant un processus de cuisson et le transférer à l'unité secondaire (4), moyennant quoi l'unité secondaire (4) est conçue pour évaluer et traiter les données reçues de l'unité primaire (3) et afficher et/ou envoyer des instructions de manutention correspondantes à l'unité primaire (3),
dans lequel l'unité secondaire (4) se présente sous la forme d'un smartphone, d'un ordinateur portatif, d'un PC-tablette, d'un pager ou d'un PC,
**caractérisé en ce que** l'unité secondaire (4) est conçue de sorte qu'en partant de l'aliment ayant la durée de cuisson la plus longue, elle détermine et affiche un moment d'insertion respectivement optimal pour l'aliment ayant la durée de cuisson immédiatement la plus courte.

2. Dispositif de commande, de réglage et de manipulation selon la revendication 1,
**caractérisé en ce que** :
- l'unité secondaire (4) présente une mémoire de données, dans laquelle des données de cuisson spécifiques aux aliments sont stockées en tenant compte de la règle RGT (règle vitesse de réaction-température) et/ou
- l'unité secondaire (4) est conçue pour commander/régler le processus de cuisson en fonction de l'aliment choisi et de la règle RGT.

3. Dispositif de commande, de réglage et de manipulation selon la revendication 1 ou 2,
**caractérisé en ce que** :
le dispositif de détection (5) présente au moins un capteur de température, par exemple une résistance NTC (à coefficient de température négatif) ou PTC (à résistance de température positif), un capteur de pression et/ou un capteur de niveau.

4. Dispositif de commande, de réglage et de manipulation selon l'une quelconque des revendications précédentes,
**caractérisé en ce que** :
- l'unité secondaire (4) est conçue pour afficher, lorsque les aliments choisis ont des températures de cuisson différentes, différents moments de préparation des aliments individuels ou
- l'unité secondaire (4) est conçue de manière à déterminer, lorsque les aliments choisis ont des températures de cuisson différentes, un moment de préparation moyen commun de tous les aliments à cuire et l'afficher sur le dispositif d'affichage.

5. Dispositif de commande, de réglage et de manipulation selon l'une quelconque des revendications précédentes,
**caractérisé en ce que** :
une communication se fait entre l'unité primaire (3) et l'unité secondaire (4) via les systèmes suivants :
- WLAN (Wireless Local Area Network),
- Bluetooth,
- GSM (Global System for Mobile Communications),
- UMTS (Universal Mobile Telecommunications System),
- DECT (Digital Enhanced Cordless Telecommunications),
- RFID (Radio Frequency Identification).

6. Dispositif de commande, de réglage et de manipulation selon l'une quelconque des revendications précédentes,
**caractérisé en ce que** :
- dans l'unité secondaire (4) sont enregistrées des valeurs de cuisson théoriques spécifiques aux aliments, en particulier en tenant compte de la règle RGT (règle de vitesse de réaction-température),
- l'unité primaire (3) est conçue pour détecter au moins une valeur de cuisson réelle influençant le processus de cuisson,
- l'unité secondaire (4) est conçue pour déterminer et afficher un écart de valeurs de cuisson théorique-réelle.

7. Dispositif de commande, de réglage et de manipulation selon la revendication 6,
**caractérisé en ce que** :
l'unité secondaire (4) est conçue de manière à calculer et à afficher une instruction d'action à partir d'un écart déterminé des valeurs de cuisson théorique-réelle.

8. Dispositif de commande, de réglage et de manipulation selon l'une quelconque des revendications précédentes,
**caractérisé en ce que** :
l'unité primaire (3) présente un dispositif d'affichage, en particulier du type DEL, qui produit un signal lors de la réception d'une indication de cuisson et/ou lorsque l'on quitte une zone de tolérance des valeurs de cuisson théorique-réelle.

9. Dispositif de commande, de réglage et de manipulation selon l'une quelconque des revendications précédentes,
**caractérisé en ce que** :
des programmes de cuisson sont mémorisés dans l'unité secondaire (4).
